# EUROPEAN PATENT APPLICATION

(11) **EP 2 680 601 A1**
(43) Date of publication of application: **01.01.2014**
(21) Application number: 12174435.3
(22) Date of filing: 29.06.2012
(51) Int. Cl.: H04N 21/45, H04N 21/81, H04N 21/854, H04N 21/44, H04N 21/4725

(54) **Video streams management system for a television apparatus**

(71) Applicant: Moda e Tecnologia S.r.l., 20122 Milano (IT)
(72) Inventor: Garzoni, Marina, 20121 MILANO (IT); Golub, Andrey, 20146 MILANO (BY)
(74) Representative: Tansini, Elio Fabrizio

(57) **Abstract**

The invention relates to a video streams management system, comprising: a digital television apparatus (10); an identifying module (15), associated to said digital television apparatus (10), for an association with a viewer (U); an auxiliary memory (20), comprising auxiliary streams of data I_{ADD}, the memory 20 being associated to the digital television apparatus 10 such as to enable an access to the auxiliary streams of data (I_{ADD}); a processing unit (30) comprising: a generating module (31) configured for generating auxiliary personal data (Iₚₑᵣₛ) and an access module (32) to the auxiliary streams of data (I_{ADD}).

## Description

### FIELD OF APPLICATION

The present invention relates to a video stream management system for a television apparatus.

In particular, the present invention relates to a personalised video stream management system for a television apparatus.

### PRIOR ART

The traditional television system has always offered television broadcasts based on static content. The viewer has always played a passive role, simply selecting from the individual television channels the programme he or she prefers. Often the viewer, dissatisfied with his or her planned television viewing, has been content to follow TV programmes that he or she does not consider of particular interest, only because there was no alternative.

In the last decade, with the advent of on-demand TV, the viewer has had the opportunity to choose some programmes, mainly movies and/or documentaries, which have enabled her or him to cultivate his or her own interests, granting him or her a more active participation.

In contrast, apart from the mentioned exception, all other information transmitted by television has maintained its "anonymous" characteristic, as it is addressed equally to all viewers, regardless of age, sex, commercial interests, culture, etc..

In particular, the advertising services offered are directed to all viewers without any criterion of choice.

This limited availability of information inspires little interest on the part of the viewer, resulting in a poor attitude to the broadcast message, especially when it is an advertisement.

In addition, when the undesired message interrupts a transmission, this can generate in the viewer an aversion to the message itself.

In the light of the above, the aim of the present invention is to provide a video stream management system for television apparatus that is flexible according to the needs/tastes of the viewer.

A further aim of the present invention is to provide a system allowing advertising and informative personalised broadcasts/information for each viewer.

A further aim of the present invention is to provide a system having easy access and usability for the viewer.

### SUMMARY OF THE INVENTION

These and other aims are attained by a video stream management system for a television apparatus, according to what is described in the accompanying claims from 1 to 12. The invention, as described, achieves the following technical effects:
- it is flexible based on the needs/tastes of the viewer;
- it allows a personalised advertising for every viewer;
- it allows visualisation of personalised broadcasting/information content
- it affords easy access and usability to the viewer;
- it provides an overview of the contents of the programme by means of direct access to scenes where tagged objects are present.

The technical effects mentioned and other technical effects besides of the invention will appear in greater detail from the description, given below, of an embodiment given by way of indicative and non-limiting example with reference to the accompanying drawings.

### BRIEF DESCRIPTION OF THE DRAWINGS

Figure 1 shows a block diagram representing the invention.
Figure 2 is an image by way of example of the layout of the television apparatus of the invention.

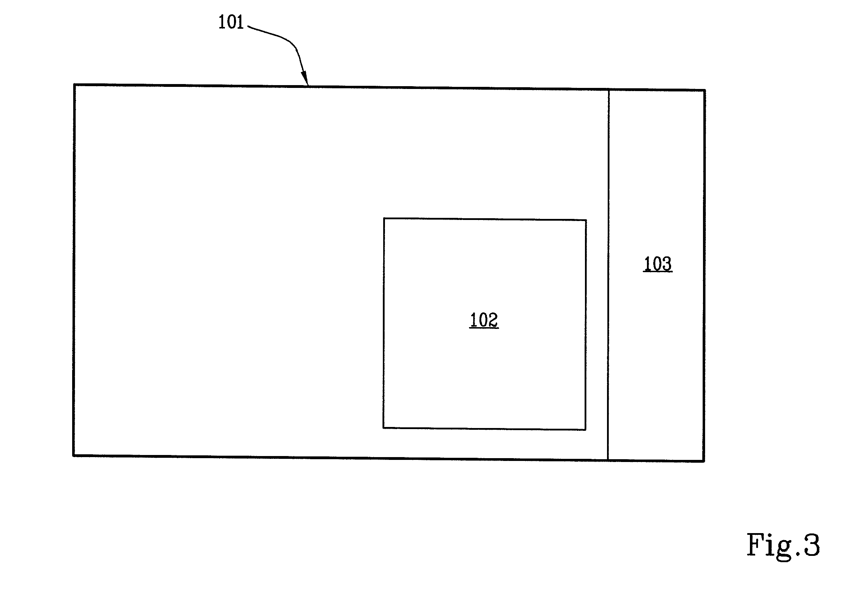

Figure 3 is a schematic view of the image of figure 2.
Figure 4 shows an image of example of the layout of the television apparatus of the invention equipped with a digital index.
Figure 5 is a schematic view of the image of figure 4.

### DETAILED DESCRIPTION OF THE INVENTION

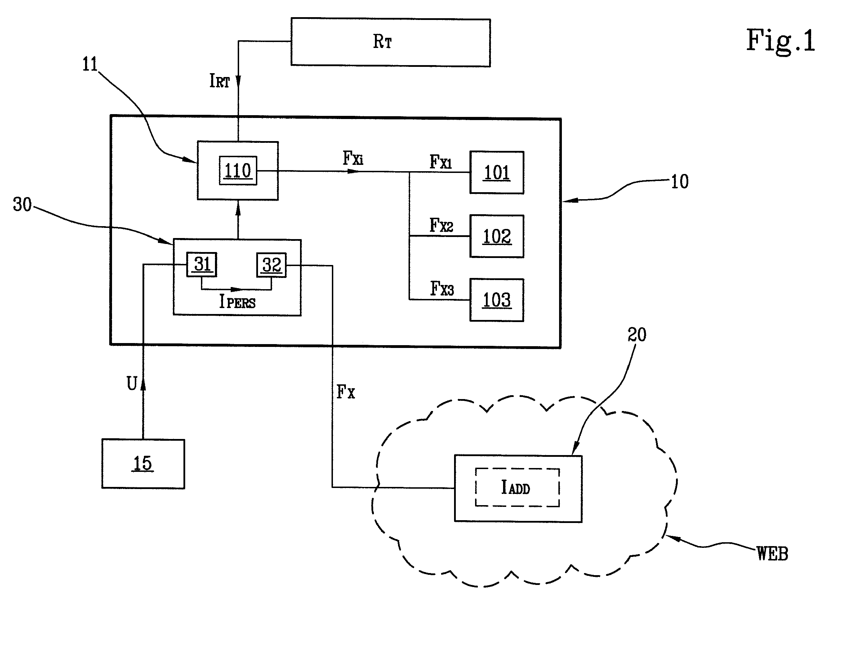

The invention describes a video streams management system for television apparatuses. With particular reference to figure 1, the system comprises a digital television apparatus 10 configured for transmission of primary streams of data I_{Rt} from television networks Rt.

In other words, the system comprises a traditional television apparatus.

The system further comprises an identifying module 15, associated to the digital television apparatus 10, configured for an operating association of a viewer U to the digital television apparatus 10.

In other words, the system enables the identification of the viewer associated to the television apparatus so that personalised configurations of the video stream can then be defined.

The system further comprises an auxiliary memory 20 comprising auxiliary information streams I_{ADD} in which the memory 20 is associated to the digital television apparatus 10, so as to allow access to the auxiliary streams of data I_{ADD}.

The auxiliary memory 20 according to the invention can be in the memory of the television apparatus 10, or on a memory stick, or within the network of a Telco TV operator such as Fastweb.

In practice, the auxiliary memory 20 is configured such as to associate an electronic programme guide EPG to the television apparatus 10.

Alternatively, the memory 20 can be included in a global connection network (web), so as to allow access to the streams of auxiliary streams of data I_{ADD} into the network. According to the invention, the auxiliary streams of data I_{ADD} include a stream of metadata Fx configured such as to be displayed by the apparatus digital television 10.

In more general terms, the video streams management system of the invention can be represented by all types of TVs> TV broadcasts (classical) to which a link is added so as to access the advanced-EPG information, possibly on the web, i.e. an electronic guide to programmes already in existence, although limited to some digital TV channels.

The electronic programme guide is a system for aiding the choice of television programmes via satellite or terrestrial digital TV for new-generation television apparatuses, to provide the list of programmes being broadcast or soon to be shown on a digital television channel.

The most widely-used standards used are XMLTV EPG and DVB EPG.

The system of the invention is configured such as to use the same channel as EPG, but also broadcasts the information on the product placement and info services via a stream of metadata obtained as described in published European patent application no. EP2418593A1, belonging to the same applicant and associated with corresponding displays of contents.

Advantageously, according to the invention, the stream of metadata Fx comprises:
- services information;
- commercial product placement.
- information about places, products, people, etc., not commercial, but informative-descriptive, for example relating to a historic site where the EPG service provides all the related historical information.

This information is mapped on the contents of the objects (people, places, goods) shown in the video stream to be accessible directly from the television apparatus screen. Alternatively, or additionally, the stream of metadata Fx includes metadata related to a corresponding advertising message.

This data is mapped on the contents of the video in real time such as to provide a unique visual experience, when the advertising or informative-descriptive message is synchronized with the video stream in the process of being viewed by the viewer. Alternatively, or additionally, the stream of meta-data (Fx) comprises a structure for video contents configured in digital-video index.

This enables the viewer (U) to scroll through and navigate the content, in a similar way to what is possible with the information trees of a DVD.

The viewer can scroll through the content and navigate through the information and commercial or descriptive indications shown on the screen.

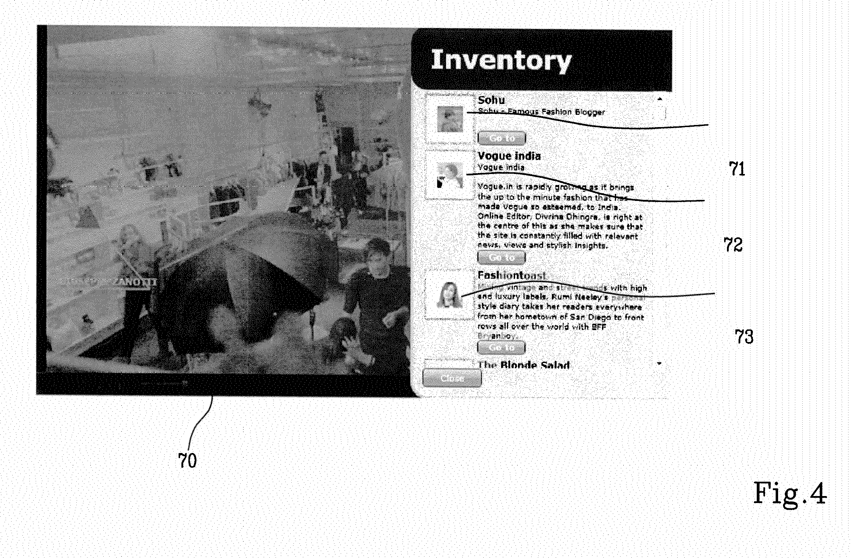

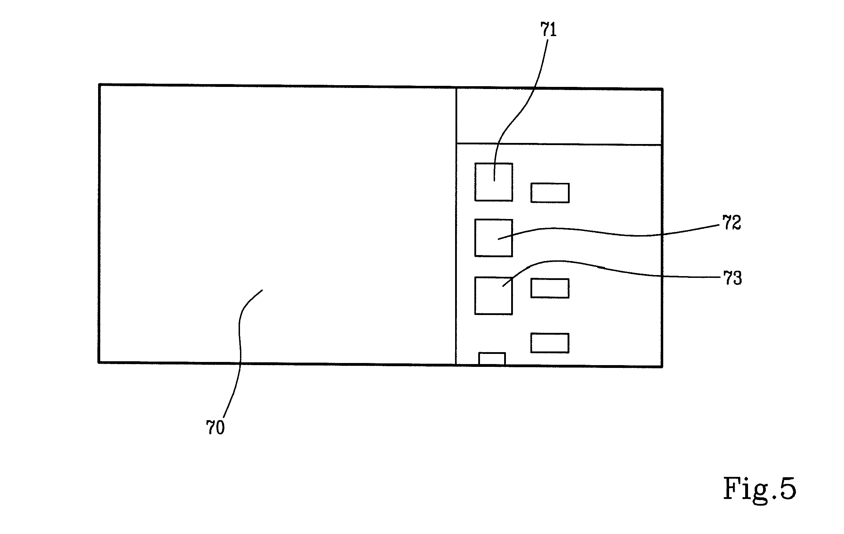

In practice, the system comprises a digital index that allows the viewer to navigate between the objects in the video stream, as shown in figures 4 and 5 in which the objects 71, 72, 73 can be accessed via the video 70 shown in the left side of the figure. According to the invention, the video stream digital index enables moving from one point to another of the video.

This indexing is different to the mundane and static content of the chapters as known on DVDs. The digital index of the invention is connected to the objects in the video stream, and it also allows another kind of vision/navigation/experience for the viewer, through direct access to scenes where the objects are indexed (tagged) (Fig. 4 and 5).

In practice, the system of the invention creates a Web-TV (on the web with the mouse), a Connected-TV (on the TV screen, with access via a game console), a Set-Top-Box or other enabling means, an Internet-TV i.e. a Web-TV watched via the TV apparatus, or a mobile-TV.

To do this the system of the invention includes a processing unit 30 associated to the digital television apparatus 10.

In general it should be noted that in this context and in the following claims, the processing unit 30 will be presented as sub-divided into memory modules and separate operating modules for the sole purpose of describing the functions thereof clearly and completely.

These functions can be performed by a single electronic device, suitably programmed, and the various modules may correspond to hardware entities and/or software routines that are part of the programmed device.

Alternatively or additionally, these functions can be performed by a plurality of electronic devices on which the modules can be distributed.

The devices involved can also employ one or more processors for executing instructions contained in the memory.

Further, the memory and operative modules can be deployed in different local or remote computers on the basis of the network they reside in.

The processing unit 30 comprises a generating module 31 configured for a generation of auxiliary personal data Iₚₑᵣₛ as a function of an operative association that has occurred between the viewer U and the digital television apparatus 10.

The processing unit 30 comprises a composition module 33 configured for combining the primary information stream I_{Rt} with the stream of metadata Fx.

Additionally, the processing unit 30 includes an access module 32 to the stream of auxiliary information I_{ADD} configured for an access to said streams as a function of the personal information associated with the auxiliary streams of data Iₚₑᵣₛ associated to the viewer (U).

The identification module 15 according to the invention is further configured such as to customize the user's profile.

In fact, for example, a user U may declare in his or her profile that he or she is not interested in sports but, for example, in fashion.

The system provides all types of advertising compatible with the programme shown, and displays material which suits the profile.

In this way the advertising is to the viewer's taste.

Alternatively, the system provides information about generic broadcasting information, compatible with the programme shown, such as information about a person, place, service, without being classified as advertising but only as additional information.

The viewer can also, as explained in the published application of European patent no. EP2418593A1, belonging to the same applicant, operate on the banners/interactive objects of the program and add them to a wish list.

This "teaches" the system that the viewer likes a certain type of advertising. A memory module 151 included in the module 15 stores this information so that the system can suggest a targeted advertising on the user's tastes/interests.

According to the invention, the access module 32 includes a video streams 11 player which can read the stream of metadata Fx so that they can be viewed via the digital television apparatus 10.

The video streams 11 player is configured for:
- loading the primary data stream (I_{Rt});
- loading the stream of metadata (Fx);
- visualizing the video stream integrated with the metadata.

In other words, the video streams player 11 receives standard video contents (e.g. from satellite, DTT, the Internet or another besides), loads the Interactive-EPG, which corresponds to this video, and matches the two data sources such as to generate a visual effect for the viewer (user experience) which enables the display of special signs or banners or others besides (according to what has been decided/personalised in a setup phase by the viewer via the user interface of the programme) and an interaction with the viewer.

The "match" between EPG and video can be realized in a plurality of versions; is not a "standard" match since the only constraint required is that the system loads an EPG-Interactive "identified" or "selected because of a certain correspondence of logic ".

The EPG may also be a third-party service, not necessarily of the television standard type DVB-H etc.

In other words, the EPG recognises a "contents code" and then unloads corresponding EPG-Interactives from the auxiliary memory 20 and applies them.

In still other words, the system takes the TV video stream from any source, in some way recognises its code, and determines an EPG-interactive.

Advantageously, according to the invention, the end user interacts with the screen.

The interaction can be carried out via the classic "remote control" unit, with a dedicated button, or a programmed standard planned for the "get info" function, or gesture control such as with games consoles or another natural interaction mode for the end user with the original content.

In substance, the information content or advertising can be accessed in the same way with which channels are changed.

The interaction can also function in the absence of the mouse-type user experience. According to what has been stated, the auxiliary information IADD becomes "taggable", i.e. retrievable from the video stream Irt in which they are included. Preferably, the meta-information includes meta-data in the required format for the web. In other words, the device of the invention is configured for generating a stream of metadata, synchronized with the primary stream Irt.

This stream can be interpreted by any video player that processes the primary stream Irt as described above, i.e. implements the same algorithm of video/metadata matching. The video player is an application that on the one hand takes the primary stream I, and on the other downloads the meta-data stream FX from a database and displays the video integrated with metadata.

In this way, the static video is made interactive.

Preferably, but not limitedly, the video player also shows the banners that correspond to the objects shown and which vary together with the interactive video content.

An important advantage is that the video player creates interactive video "in real-time". The viewer perceives a modified video, but in practice, sees the original video with the integrated effects of interaction.

According to the invention, the video stream player 11 comprises a selection module 110 configured to allow the viewer U to select a subset FXI of the auxiliary video stream Fx representative of the viewer U preferences.

In general, the selection requested by a user can be applied to any object and for "broadcasting-informative" purposes or for "commercial product placement", i.e. to place a mark within the scenes of a video stream as a recognition on the part of the company that is advertised.

For example, the video stream can be a movie, where the actors can be clicked on, places, houses, etc., so that information on what is shown can be obtained.

With the selection module 110 the technical effect of simplifying the selection of the object is achieved, resulting in a simplification of the purchase of a selected object, better display of features of the object, as well as increased promotional effect on the consumer.

The selection module 110 also enables direct linking to the object in the video stream in order to directly access the object at any time and/or to directly link the object in the video stream such as to access the object from any location.

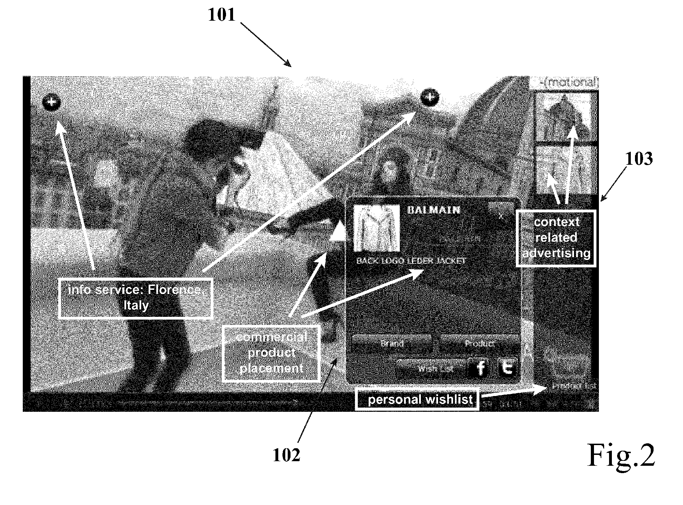

With particular reference to figures 1 and 2, the system of the invention further comprises at least a display area 101, 102, 103, 104, 105 on said television apparatus 10.

The display areas 101, 102, 103, 104, 105 include auxiliary information I_{ADD} generated as a function of said subsets of the video stream Fxi of the video stream Fx, in which the subsets Fxi have been selected by the viewer U.

## Claims

1. A video stream management system, comprising:
• a digital television apparatus (10) configured for a primary data stream transmission (I_{Rt}) originating from television networks (Rt);
• an identifying module (15), associated to said digital television apparatus (10), configured for an operative association of a viewer (U) to said digital television apparatus (10);
• an auxiliary memory (20), comprising auxiliary streams of data I_{ADD}, said memory being associated to said digital television apparatus (10) such as to enable an access to said auxiliary streams of data (I_{ADD});
• a processing unit (30) associated to said digital television apparatus (10), comprising:
○ a generating module (31) configured for a generating of auxiliary personal data (Iₚₑᵣₛ) as a function of said completed operative association between said viewer (U) and said digital television apparatus (10);
○ an access module (32) to said auxiliary streams of data (I_{ADD}) configured for an access to said streams as a function of said auxiliary personal data (Iₚₑᵣₛ) associated to said viewer (U).

2. The system according to claim 1, wherein said auxiliary data (I_{ADD}) comprise a stream of metadata (Fx) configured such as to be displayed via said digital television apparatus (10).

3. The system according to any one of claims 1 or 2, wherein said stream of metadata (Fx) comprises one or more from among:
• service data;
• data relating to a commercial positioning of the products;
• broadcasting-informative data.

4. The system according to any one of claims 1 or 2, wherein said stream of metadata (Fx) comprises metadata connected to a corresponding advertising message.

5. The system according to claims 1 or 2, wherein said stream of metadata (Fx) comprises a structure for the video contents which structure is configured by digital video index.

6. The system according to any one of the preceding claims, wherein said processing unit (30) comprises a composition module (33) configured for combining said primary data stream (I_{Rt}) with said metadata stream (Fx).

7. The system according to any one of the preceding claims, wherein said access module (32) comprises a video streams player (11) for reading said stream of metadata (Fx) such that the metadata can be displayed by said digital television apparatus (10).

8. The system according to claim 6, wherein said video streams player (11) is configured for:
• loading the primary data stream (I_{Rt});
• loading the stream of metadata (Fx);
• visualizing the video stream integrated with the metadata.

9. The system according to any one of claims 7 or 8, wherein said video stream player (11) comprises a selection module (110) configured for enabling said viewer (U) to select a sub-set (Fxi) of said video stream (Fx) representing the viewer's (U) preferences.

10. The system according to any one of the preceding claims, wherein said television apparatus (10) comprises at least a display area (101, 102, 103, 104, 105).

11. The system according to claim 9, wherein said at least a display area (101, 102, 103, 104, 105) comprises said auxiliary data (I_{ADD}) generated as a function of said sub-sets (Fxi) of said video stream (Fx) selected by said viewer (U).

12. The system according to any one of the preceding claims, wherein the auxiliary memory (20) is comprised in a global connection network (web).
